# EUROPEAN PATENT APPLICATION

(11) **EP 2 873 953 A1**
(43) Date of publication of application: **20.05.2015**
(21) Application number: 13192720.4
(22) Date of filing: 13.11.2013
(51) Int. Cl.: G01J 1/04, G01J 1/02, G01J 1/06, G01J 1/42, G01J 3/51, G01J 3/02, G01J 3/26, G01J 3/36, G02B 5/20, G02B 27/46

(54) **Light sensor arrangement and spectrometer**

(71) Applicant: ams AG, 8141 Unterpremstätten (AT)
(72) Inventor: Manninger, Mario, 8141 Unterpremstätten (AT); Trattler, Peter, 8055 Graz (AT)
(74) Representative: Epping - Hermann - Fischer

(57) **Abstract**

A light sensor arrangement comprising a stack having a light sensor (1), an optical filter (3), and a mask (2). In particular, the light sensor (1) comprises a light sensitive surface (11). The mask (2) comprises an upper opaque base (M3) facing away from the light sensitive surface (11) and having first apertures (AM3) each confining an optical path in the mask (2), respectively. The optical paths are designed for allowing incident light to reach the light sensitive surface (11) when having an angle of incidence from an allowed interval of angles (INT) determined by the size of the first apertures (AM3) and defined with respect to an optical axis (OA) of the optical paths, respectively. A spectrometer is shown comprising at least light sensor arrangements of the afore-mentioned kind.

## Description

This invention relates to a light sensor arrangement and to a spectrometer.

Colour sensors are devices which allow precise colour measurement, determination and discrimination. Accurate colour sensors use silicon diodes and organic filters. The organic filters are used to filter out specific parts of the light spectrum to be detected. The colour sensor then records a corresponding colour signal which, in turn, is indicative of the colour of light. Organic colour filters have a certain variability, mainly in the stop band, which is due to the variety in thickness of the material they are made of. In addition, these filters are often transparent for infrared light. Accurate colour sensors typically employ a combination of organic colour filters and interference filters to block infrared light.

An interference filter, or dichroic filter, is an optical filter that reflects one or more spectral bands or spectral lines and transmits others. Typically these types of filters maintain very low absorption for all wavelengths of interest. Using interference filters as colour filters has the advantage that its optical properties, for example, high-pass, low-pass, band-pass or band rejection, can be controlled to a high degree. However, interference filters have the inherent disadvantage that their optical properties are depending on the angle under which light incidents upon the filter.

The directional changes in the optical properties of an interference filter are affected by increasing the angel of incidence or angle of aperture, and also depend on various other things. For example, the spectral position of the filter, the state of polarization of the incident light, the materials used for the layers and the design of the filter system as a whole are parameters that affect the optical properties of the filter. Even filters of the same type can exhibit different degrees of angular dependence due to the fact that the system design depends on the spectral position of the filter and must vary in order to comply with the spectral specifications of a device to be used with the interference filter. The transmission wavelength or edge position of interference filters is shifted towards shorter wavelengths when increasing the angle of incidence.

Recently, plasmonic colour filters have become available to image sensor applications. In this context, surface-plasmon based nanostructures offer the ability to efficiently manipulate light due to their small dimensions. By changing the nanostructure, colour filters can be produced which are capable of transmitting arbitrary colours at high spatial resolution with the promise of compact device architectures. However, the spectral responsivity of plasmonic filters also changes with the angle of incident light.

Absorption filters do not have angular dependence, but their filter characteristics are limited to their chemical composition. These design constraints have the disadvantage that their filter characteristics can only be adjusted within a limited range, for example they do not have a steep response compared to angular dependent interference filters. The art has proposed several optical solutions and complicated systems are available today to restrict the angel of incidence close to zero degrees to overcome the angular dependence effect of the above-mentioned filter types. Such systems can be based on spectrometers using prisms or other rather bulky optical setups. The size of these optics can be significant. The total height of light sensors, however, becomes more important in today's applications, where a small product thickness is one key selling factor, for example for mobile devices like mobile- or Smartphones.

It is an object of the present invention to provide a light sensor arrangement and a spectrometer with a reduced dimensions.

The object is solved by the subject-matter of the independent claims. Further embodiments are subject to dependent claims.

A light sensor arrangement comprises a stack having a light sensor, an optical filter, and a mask. The light sensor further comprises a light-sensitive surface. The mask comprises an upper opaque base facing away from the light sensitive surface and has first apertures, each confining an optical path in the mask.

The optical paths are designed for allowing incident light to reach the light-sensitive surface when having an angle of incidence from within an allowed interval of angles. The allowed interval of angles is determined by the size of the first apertures and defined with respect to an optical axis of the optical paths, respectively.

In operation the light sensor arrangement receives light either from a light source to be analysed or ambient light from the environment. In either case light is incident on the light sensor arrangement under a certain angle of incidence. The mask has the above-mentioned structure and defines a certain directionality of the light sensor arrangement. In fact, the mask blocks all light from angles larger than the allowed interval of angles such that mainly light with an incident angle close to zero will reach the light sensor, i.e. its light-sensitive surface. Furthermore, the optical filter determines which wavelength from the incident light is allowed to pass to reach the light-sensitive surface.

The proposed light sensor arrangement has improved spectral properties because of the directionality of the mask, in particular, its opaque base and apertures. Therefore, only a defined (defined in terms of the allowed interval of angles) light can reach the light-sensitive surface and therefore a directional optical filter can be used without any need for a bulky optical system. The light sensor arrangement can thus be stacked with a rather low total height, which can be a key factor in applications where low space requirements are of the essence.

In a further embodiment the optical filter comprises a directional optical filter. The directional optical filter, for example, is an interference filter or a plasmonic filter.

In a further embodiment, the mask comprises a stack with a plurality of bases, comprising the upper base as top base. The bases of the plurality of bases comprise a plurality of further apertures. The plurality of further apertures is arranged to confine the optical paths in the mask, respectively. This is done in such a way that the allowed interval of angles is determined by the sizes of the first and the further apertures. The plurality of further bases is stacked and thereby forms the mask, i.e. the bases form layers of the stack.

In a further embodiment, the bases from the plurality of bases are stacked to one another by means of vias. Alternatively, the plurality of bases are stacked directly to one another.

In the further embodiment, each optical axis of the optical paths is aligned with the first apertures. In particular, each optical axis is aligned with the geometrical centres of the first apertures. Generally, it is possible to define any angle of the optical paths in the mask. For example, with an angle of 45° the field of view of the light sensor arrangement is tilted with respect to the light sensitive surface.

In a further embodiment, the optical axes are aligned with respect to a surface normal of the light-sensitive surface. In particular, the optical axes are aligned parallel to the surface normal of the light-sensitive surface. In this case the field of view of the light sensor arrangement is aligned with respect to the light sensitive surface.

In a further embodiment, the first apertures are arranged on the upper base in a regular pattern. In particular, the first apertures are arranged on the upper base in a matrix pattern. Preferably, the further apertures are arranged in the same matrix pattern.

In a further embodiment, the first apertures have a polyangular shape. Preferably, the further apertures have the same polyangular shape.

In a further embodiment, the first apertures have a rectangular shape. Preferably, the further apertures have the same rectangular shape.

In a further embodiment, the first apertures have a honeycomb shape. Preferably, the further apertures have the same honeycomb shape.

In a further embodiment, the first and further apertures have the same shape and size.

In a further embodiment, the optical filter is connected to the upper base and the mask is connected between the optical filter and the light sensor.

In a further embodiment, the optical filter is connected between the light sensor and the mask.

In a further embodiment, the light sensor arrangement comprises a diffuser connected on top of the stack of the light sensor, the optical filter, and the mask and faces away from the light-sensitive surface.

A spectrometer according to the present principle comprises at least a first and a second light sensor arrangement according to the principle discussed above. The optical filter of the first light sensor arrangement has a first optical pass band and the optical filter of the second light sensor arrangement has a second optical pass band.

The first and second light sensor arrangement are each sensitive to different spectral bands and, thus, the respective sensor signals can be used to determine a spectral content of the incident light. The spectrometer can be used for colour sensing as well.

In the following, the principle presented above will be described in more detail with respect to drawings in which exemplary embodiments are presented. Elements corresponding to similar elements of among the embodiments are designated with the same reference numerals.
- Figure 1: shows a cross-section of an exemplary embodiment of the light sensor arrangement,
- Figure 2: shows a top view of an exemplary embodiment of the light sensor arrangement,
- Figure 3: shows another top view of an exemplary embodiment of the light sensor arrangement,
- Figure 4: shows another top view of an exemplary embodiment of the light sensor arrangement,
- Figure 5: shows a cross-section of another exemplary embodiment of the light sensor arrangement, and
- Figure 6: shows a cross-section of another exemplary embodiment of the light sensor arrangement.

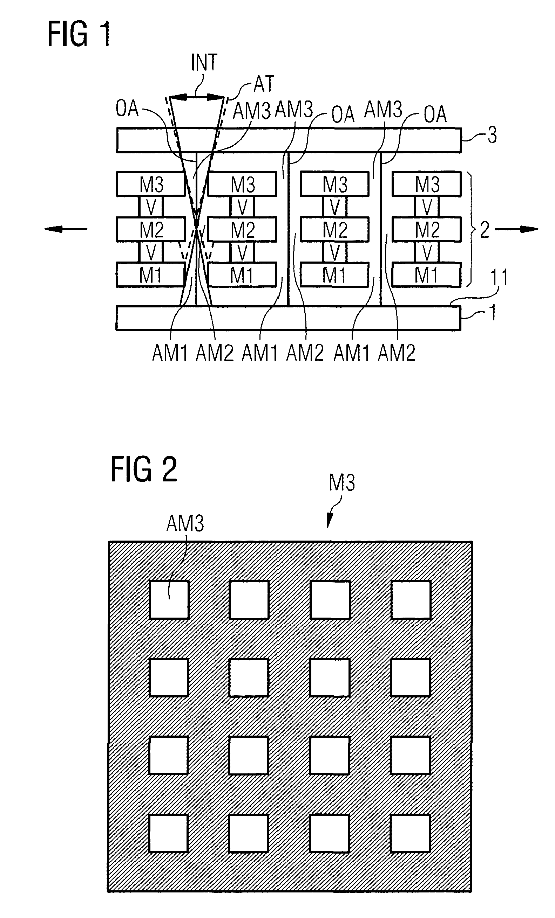

Figure 1 shows a cross-section of an exemplary embodiment of the light sensor arrangement. The drawing depicts a stack comprising a light sensor 1, a mask 2, and an optical filter 3. In this particular embodiment the optical filter is stacked on top of the mask which is stacked on top of the light sensor.

The light sensor comprises a photo-diode but, generally, the light sensor 1 can be of another sensor type as well. Other examples are CMOS and CCD detectors or the like. The light sensor 1 comprises a light sensitive surface 11 which faces the stack of mask 2 and optical filter 3.

The optical filter 3 has directional properties, i.e. is a directional optical filter. The directional properties effect the transmission characteristics of the optical filter. Typically, the optical filter 3 has a transmission curve which is defined for perpendicular incidence. The transmission can be high-pass, low-pass, band-pass, or band-rejection and is characterized by one or more central wavelengths. However, when the angle of incidence of an incoming light is increased from zero, the central wavelength(s) of the optical filter 3 typically decreases and is shifted toward shorter wavelengths. The transmission band widens and the maximum transmission decreases. In the following, the directional optical filter will be referred to as optical filter 3 for short. For example, the optical filter 3 is an interference filter or a plasmonic filter.

The mask 2 comprises a stack having a plurality of bases 21, in this particular embodiment three bases, i.e. a lower base M1, a middle base M2, and an upper base M3. The upper base M3 faces away from the light sensitive surface 11 and is coupled to the optical filter 3. At least the upper base M3 comprises an opaque material, preferably a metal. The term "opaque" defines an optical property of a material. An opaque object is neither transparent (allowing all light to pass through) nor translucent (allowing some light to pass through). Light in this context comprises (near) infrared, visible, and ultraviolet light. Preferably, also the lower base M1 and the middle base M2 comprise the same opaque material and, preferably, are made from a metal.

In this embodiment the lower base M1, the middle base M2, and the upper base M3 are interconnected by means of vias V. The vias are preferably made from the same opaque material and, preferably, are made from a metal. Furthermore, the middle base M2, and the upper base M3 and/or the vias V can be coated with a layer of low reflectivity, for example, a paint, in order to reduce the amount of reflected light. For the following discussion it will assumed that the lower base M1, the middle base M2, and the upper base M3 and/or the vias V are all made from metal. This has the advantage of easier fabrication, for example, in a wafer process.

The lower base M1, the middle base M2, and the upper base M3 each comprise respective apertures AM1, AM2, AM3 which, in their spatial arrangement, confine optical paths OP through the mask. In this embodiment the apertures AM1, AM2, AM3 all have the same rectangular or square shape and size (see also Figure 2). The geometrical centers of the apertures AM1, AM2, AM3 are aligned with respect to the optical axes OA of the optical paths defined by the apertures AM1, AM2, AM3. In this embodiment the optical axes OA are orthogonal with respect to the light sensitive area 11.

The mask 2 determines an allowed interval of angles INT which allows light incident on the light sensor arrangement to reach the light sensitive surface 11. The allowed interval of angles INT is defined with respect to a surface normal of the light sensor. An angle of incidence is the angle between the incident ray on the light sensitive surface and the line perpendicular to the surface at the point of incidence, i.e. the surface normal of the light sensor, for example the optical axes OA. In this embodiment rays of light having an angle of incidence equal to zero pass the mask 2 via the apertures AM1, AM2, AM3 and can reach the light sensitive surface 11 to be detected by means of a sensor signal. At this angle of incidence the central wavelength(s) of the optical filter are defined, and typically are at maximum, i.e. not shifted to shorter wavelengths.

The allowed interval of angles INT defines a cone of light within which rays of light can have an angle of incidence different than zero. However, the rays within the cone can still pass the mask 2 via the apertures AM1, AM2, AM3 and reach the light sensitive surface 11 to be detected. The size of the apertures AM1, AM2, AM3 determines the radius of the cone and, thus, the allowed interval of angles INT. Rays having an angle greater than confined by the radius of the cone are at least attenuated as depicted in the drawing by arrow AT. The attenuation can be further increased by means of the vias V. The vias V effectively provide a system of aperture stops and further divert the rays (see dashed line of arrow AT).

As only rays from within the cone or having an angle of incidence from the allowed interval of angles INT is able to reach the light sensor 1 the mask 2 lends the light sensor arrangement a certain directionality. The directional dependency of the optical filter 3 is somewhat reduced and the center wavelength(s) are only slightly shifted, e.g. towards shorter wavelengths. The light sensor arrangement can be produced with a rather low total height as no complex optical systems are necessary.

Figure 2 shows a top view of an exemplary embodiment of the light sensor arrangement. The top view shows the mask 2 as seen from above, for example through the optical filter 3 (not shown). Thus, the drawing shows only the upper mask M3 and respective first apertures AM3. Generally, the masks 2 shown in this and the following drawings can be used with all embodiments of the light sensor arrangement.

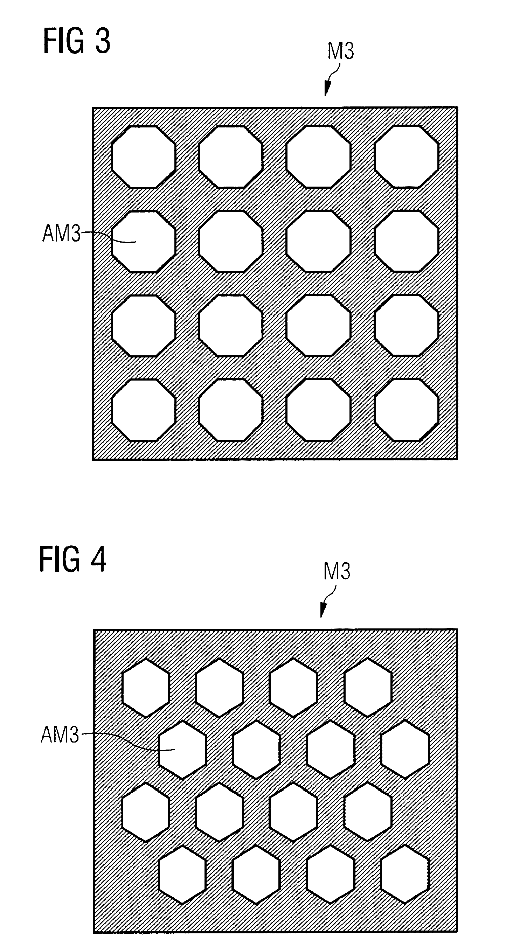

The mask 2 in the example of Figure 2 has a matrix pattern of square or rectangular shaped apertures. Figure 3 shows another top view of an exemplary embodiment of the light sensor arrangement. In this example, the mask has a matrix pattern of honeycomb shaped apertures. Figure 4 shows another top view of an exemplary embodiment of the light sensor arrangement. In this example, the mask has a regular pattern of polyangular shaped apertures.

Generally, the apertures AM1, AM2, AM3 in the mask 2 can have polyangular shape. The actual shape determines the amount of light reaching the light sensitive surface 11. In fact, the mask 2 blocks a certain amount of light which, thus, cannot be used for detection even though it had an angle of incidence from within the allowed interval of angles INT. The mask geometries of Figures 2 to 4 differ from each other in this respect with the honeycomb shaped apertures allowing the highest amount of light reaching the light sensitive surface 11.

Other geometries or shapes are possible and the light sensor arrangement is not restricted to the embodiments shown here. Other geometries or shapes can be determined by means of optical simulation and raytracing. It should be noted that Figures 2 to 4 only show the upper base M3 and assume that the apertures in the lower base M1, the middle base M2, and the upper base M3 are aligned with respect to the optical axes OA of the optical paths in the mask. This does not necessarily have to be the case. The apertures in the different bases M1, M2, M3 can have different shape and size. Furthermore, their respective geometrical centers can be shifted with respect to each effectively tilting the optical axes OA of the optical paths in the mask in order to alter the field of view of the light sensor 1. Even if aligned with along their geometrical centers the apertures in the different bases M1, M2, M3 can have different shape and size to establish an optical system of aperture stops. This can improve contrast and further attenuate incident rays of light having angles of incidence greater than the allowed interval.

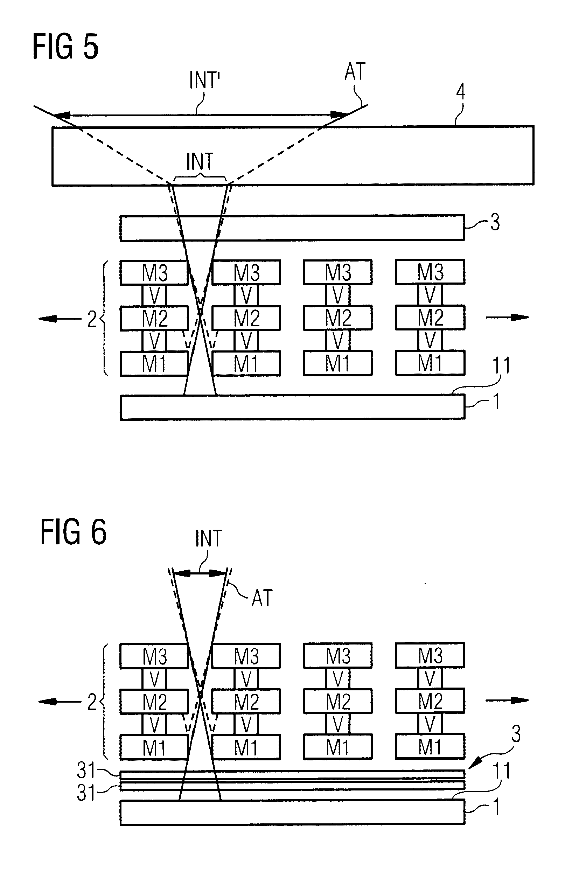

Figure 5 shows another top view of an exemplary embodiment of the light sensor arrangement. The light sensor arrangement is the same as in Figure 1 except that the optical filter 3 is coupled to a diffusor 4. The diffusor 4 allows for an increased field-of-view INT'. It increases the cone of light which gets funnelled into the allowed interval INT.

Figure 6 shows a cross-section of another exemplary embodiment of the light sensor arrangement. This exemplary embodiment is similar to the one of Figure 1. For example, the same mask 2 can be used. However, the optical filter 3 comprises a plasmonic filter of two thin metal layers 31. The optical filter 3 is stacked between the mask 2 and the light sensor 1. As mentioned already above the plasmonic filter is also a directional optical filter.

### Reference numerals

- 1: light sensor
- 11: light sensitive surface
- 2: mask
- 3: optical filter
- 31: metal layer
- 4: diffuser
- AM1: aperture
- AM2: aperture
- AM3: aperture
- AT: attenuation
- INT: allowed interval
- INT': increased field of view
- M1: lower base
- M2: middle base
- M3: upper base
- OA: optical axis
- V: via

## Claims

1. Light sensor arrangement, comprising a stack having a light sensor (1), an optical filter (3), and a mask (2), wherein
- the light sensor (1) comprises a light sensitive surface (11), and
- the mask (2) comprises an upper opaque base (M3) facing away from the light sensitive surface (11) and having first apertures (AM3) each confining an optical path in the mask (2), respectively, and
- the optical paths are designed for allowing incident light to reach the light sensitive surface (11) when having an angle of incidence from an allowed interval of angles (INT) determined by the size of the first apertures (AM3) and defined with respect to an optical axis (OA) of the optical paths, respectively.

2. Light sensor arrangement according to claim 1, wherein the optical filter (3) comprises a directional optical filter, in particular an interference filter or a plasmonic filter.

3. Light sensor arrangement according to claim 1 or 2, wherein
- the mask (2) comprises a stack of a plurality of bases (M1, M2, M3) comprising the upper base (M3), and having a plurality of further apertures (AM1, AM2),
- the plurality of further apertures (AM1, AM2, AM3) are arranged to confine the optical paths in the mask (2), respectively, such that the allowed interval of angles (INT) is determined by the sizes of the first and the further apertures (AM1, AM2, AM3), and
- the plurality of further bases (M1, M2, M3) are stacked thereby forming the mask (2).

4. Light sensor arrangement according to claim 3, wherein the bases from the plurality of bases (M1, M2, M3) are stacked to one another by means of vias (V) or stacked directly to one another.

5. Light sensor arrangement according to one of claims 1 to 4, wherein each optical axis (OA) of the optical paths is aligned with the first aperture (AM3), in particular aligned with the geometrical center of the first aperture (M3).

6. Light sensor arrangement according to one of claims 1 to 5, wherein the optical axes (OA) are aligned with respect to a surface normal of the light sensitive surface (11), in particular aligned parallel to the surface normal of the light sensitive surface (11).

7. Light sensor arrangement according to one of claims 1 to 6, wherein the first apertures (AM3) are arranged on the upper base (M3) in a regular pattern, in particular arranged on the upper base (M3) in a matrix pattern.

8. Light sensor arrangement according to one of claims 1 to 7, wherein the first apertures (AM3) have polyangular shape.

9. Light sensor arrangement according to one of claims 1 to 8, wherein the first apertures (AM3) have rectangular shape.

10. Light sensor arrangement according to one of claims 1 to 9, wherein the first apertures (AM3) have honeycomb shape.

11. Light sensor arrangement according to one of claims 3 to 10, wherein the first and further apertures (AM1, AM2, AM3) have the same shape and size.

12. Light sensor arrangement according to one of claims 1 to 11, wherein the optical filter (3) is connected to the upper base (M3) and the mask (2) is connected between the optical filter (3) and the light sensor (1).

13. Light sensor arrangement according to one of claims 1 to 12, wherein the optical filter (3) is connected between the light sensor (1) and the mask (2).

14. Light sensor arrangement according to one of claims 1 to 13, further comprising a diffusor (4) connected to a top side of the stack having the light sensor (1), the optical filter (3), and the mask (2) and facing away the light sensitive surface (11).

15. Spectrometer comprising at least a first and second light sensor arrangement according to one claims 1 to 14, wherein the optical filter (3) of the first light sensor arrangement has a first optical band-pass and the optical filter (3) of the second light sensor arrangement has a second optical band-pass.
